# EUROPÄISCHE PATENTANMELDUNG

(11) **EP 4 826 245 A1**
(43) Veröffentlichungstag der Anmeldung: **21.10.2026**
(21) Anmeldenummer: 26153126.3
(22) Anmeldetag: 21.01.2026
(51) Int. Cl.: F03D 17/00

(54) **SENSORANORDNUNG ZUM ERFASSEN MINDESTENS EINER ERSTEN VERFORMUNG EINES ROTORBLATTS EINER WINDKRAFTANLAGE**

(30) Priorität: 17.04.2025 DE 102025001277
(71) Anmelder: Dr. Johannes Heidenhain GmbH, 83301 Traunreut (DE)
(72) Erfinder: Meißner, Markus, 83236 Übersee (DE); Kraus, Robert, 83308 Trostberg (DE); Hafner, Michael, 83368 St. Georgen (DE)

(57) **Zusammenfassung**

Die vorliegende Erfindung betrifft eine Sensoranordnung zum Erfassen mindestens einer ersten Verformung eines Rotorblatts (1) einer Windkraftanlage. Die Sensoranordnung weist eine an einer ersten Position (P1) angeordnete Sendeeinheit (102-1) und mindestens eine entlang einer Biegelinie des Rotorblatts (1) an einer zweiten Position (P2) angeordnete erste Sende-Empfangs-Einheit (102-2) auf. Die Sensoranordnung ist derart ausgebildet, dass ein erster Lichtpuls (111-1), ein zweiter Lichtpuls (111-2) und ein dritter Lichtpuls (111-3) als Teil einer Pulsfolge (111) erzeugt werden. Der erste Lichtpuls (111-1), der zweite Lichtpuls (111-2) und der dritte Lichtpuls (111-3) weisen eine Verteilung innerhalb der Pulsfolge (111) auf. Die Sensoranordnung ist dazu ausgebildet, eine erste Pulsdauer (*τ*₁), ein zweite Pulsdauer (*τ*₂) und eine dritte Pulsdauer (*τ*₃) zufällig festzulegen und/oder die Verteilung zufällig auszuwählen.

## Beschreibung

### GEBIET DER TECHNIK

Die vorliegende Erfindung betrifft eine Sensoranordnung zum Erfassen mindestens einer ersten Verformung eines Rotorblatts einer Windkraftanlage nach dem Oberbegriff des Anspruchs 1.

### STAND DER TECHNIK

WO 2021/064243 A1 offenbart ein System zur Verfolgung der Bewegung eines Rotorblatts einer Windkraftanlage. Beispielsweise ist das System zur Verfolgung der Blattbewegung am Rotorblatt installiert. Das Rotorblatt umfasst eine Blattwurzel und eine Blattspitze. Das System umfasst mindestens ein Lichtmodul, das mindestens eine erste Lichtquelle umfasst, die vorzugsweise dazu dient, Licht in Richtung der Blattwurzel zu emittieren. Es ist eine optische Messvorrichtung vorgesehen, die vorzugsweise an der Blattwurzel angeordnet ist, um das von der/den ersten Lichtquelle(n) emittierte Licht zu empfangen. Bei der optischen Messeinrichtung handelt es sich vorzugsweise um einen positionsempfindlichen Detektor (PSD; "position sensitive detector") zur Erkennung der Position der ersten Lichtquelle relativ zum positionsempfindlichen Detektor. Eine einzige Lichtquelle, die an der Blattspitze, in der Nähe der Blattspitze oder in Richtung der Blattspitze angeordnet ist, genügt, um eine Durchbiegung des Rotorblatts zu messen. Vorteilhafterweise wird die erste Lichtquelle mit einer vordefinierten Modulationsfrequenz moduliert, sodass das Licht der ersten Lichtquelle vom Umgebungslicht unterschieden werden kann. Somit wird der Einfluss der Umgebungslichtbedingungen während der Erfassung minimiert.

Ein Verfahren bzw. eine Vorrichtung zur Erhöhung der Störunterdrückung, insbesondere bei optischen Näherungsschaltern, mit Hilfe eines, eine optische Pulsfolge aussendenden optischen Senders, mit Hilfe eines ein Messsignal ausgebenden optischen Empfängers und mit Hilfe einer den optischen Sender steuernden und das Messsignal auswertenden Steuer- und Auswerteeinheit ist in DE 43 30 223 A1 offenbart.

### ZUSAMMENFASSUNG DER ERFINDUNG

Der Erfindung liegt die Aufgabe zugrunde, eine Sensoranordnung zum Erfassen mindestens einer ersten Verformung eines Rotorblatts einer Windkraftanlage anzugeben, die einfach und zuverlässig aufgebaut ist und mit der eine verbesserte Detektion des Rotorblatts ermöglicht wird.

Diese Aufgabe wird erfindungsgemäß durch eine Sensoranordnung mit den Merkmalen des Anspruchs 1 gelöst.

Die erfindungsgemäß ausgebildete Sensoranordnung dient zum Erfassen mindestens einer ersten Verformung eines Rotorblatts einer Windkraftanlage. Die Sensoranordnung weist eine an einer ersten Position angeordnete Sendeeinheit und mindestens eine entlang einer Biegelinie des Rotorblatts an einer zweiten Position angeordnete erste Sende-Empfangs-Einheit auf. Die Sensoranordnung ist zum Erzeugen von erstem bis drittem Licht ausgebildet.

Die Sendeeinheit ist derart ausgebildet, dass das erste Licht als ein erster Lichtpuls mit einer ersten Pulsdauer erzeugt wird. Die Sensoranordnung ist derart ausgebildet, dass das zweite Licht als ein zweiter Lichtpuls mit einer zweiten Pulsdauer erzeugt wird. Die erste Sende-Empfangs-Einheit ist derart ausgebildet, dass das dritte Licht als ein dritter Lichtpuls mit einer dritten Pulsdauer erzeugt wird. Die Sensoranordnung ist derart ausgebildet, dass der erste Lichtpuls, der zweite Lichtpuls und der dritte Lichtpuls als Teil einer Pulsfolge erzeugt werden. Der erste Lichtpuls, der zweite Lichtpuls und der dritte Lichtpuls weisen eine Verteilung innerhalb der Pulsfolge auf. Die Sensoranordnung ist dazu ausgebildet, die erste Pulsdauer, die zweite Pulsdauer und die dritte Pulsdauer zufällig festzulegen und/oder die Verteilung zufällig auszuwählen.

Vorzugsweise ist die Sendeeinheit zum Erzeugen des ersten Lichts ausgebildet. Die erste Sende-Empfangs-Einheit ist vorzugsweise zum Erzeugen des zweiten und dritten Lichts ausgebildet.

Alternativ kann die Sendeeinheit zum Erzeugen des ersten und zweiten Lichts ausgebildet sein. Die erste Sende-Empfangs-Einheit kann alternativ zum Erzeugen des dritten Lichts ausgebildet sein.

Vorzugsweise ist die Sensoranordnung dazu ausgebildet, die erste Pulsdauer, die zweite Pulsdauer und die dritte Pulsdauer jeweils zufällig festzulegen, ohne dass die Verteilung zufällig ausgewählt wird. Dadurch kann ein beispielhaftes erstes Pulsschema mit einer beispielhaften Pulsfolge realisiert werden. Durch das beispielhafte erste Pulsschema kann eine durch Umwelteinflüsse (insbesondere Umgebungslicht) hervorgerufene Störung effizient unterdrückt werden.

Alternativ kann die Sensoranordnung dazu ausgebildet sein, die erste Pulsdauer, die zweite Pulsdauer und die dritte Pulsdauer jeweils zufällig festzulegen und die Verteilung zufällig auszuwählen. Dadurch kann ein beispielhaftes zweites Pulsschema mit einer beispielhaften (alternativen) Pulsfolge realisiert werden. Durch das beispielhafte zweite Pulsschema kann eine Unterdrückung der Störung (insbesondere Umgebungslicht) weiter verbessert werden.

Es ist vorteilhaft, wenn die Verteilung eine Reihenfolge umfasst, wobei die Reihenfolge durch eine Permutation der Erzeugung des ersten Lichtpulses, des zweiten Lichtpulses und des dritten Lichtpulses bestimmt ist.

Es ist vorteilhaft, wenn die Sensoranordnung derart ausgebildet ist, dass der erste Lichtpuls, der zweite Lichtpuls und der dritte Lichtpuls als Teil einer ersten Gruppe von Lichtpulsen erzeugt werden, wobei die Pulsfolge die erste Gruppe von Lichtpulsen umfasst, und wenn die Sensoranordnung dazu ausgebildet ist, alle Pulsdauern der ersten Gruppe von Lichtpulsen und alle Dauern von Pulspausen innerhalb eines ersten Abschnitts der Pulsfolge jeweils zufällig festzulegen, sodass eine zufällig festgelegte Gesamtdauer der Pulsdauern der ersten Gruppe von Lichtpulsen und der Dauern von Pulspausen erhalten wird.

Vorzugsweise ist eine Dauer des ersten Abschnitts der Pulsfolge durch die Gesamtdauer der Pulsdauern der ersten Gruppe von Lichtpulsen und der Dauern von Pulspausen bestimmt.

Ein durch eine Gruppe von Lichtpulsen definierter Abschnitt der Pulsfolge kann auch als Burst bezeichnet werden. Vorzugsweise hat ein Burst somit eine zufällig festgelegte Dauer (Burstdauer).

Alternativ ist es vorteilhaft, wenn eine Dauer des ersten Abschnitts der Pulsfolge durch die Sensoranordnung fest vorgegeben ist, wobei die Sensoranordnung dazu ausgebildet ist, eine Pulsdauer eines letzten Lichtpulses der ersten Gruppe von Lichtpulsen oder eine Dauer einer letzten Pulspause innerhalb des ersten Abschnitts der Pulsfolge derart anzupassen, dass die Gesamtdauer der Pulsdauern der ersten Gruppe von Lichtpulsen und der Dauern von Pulspausen gleich der Dauer des fest vorgegeben ersten Abschnitts der Pulsfolge ist.

In alternativer Weise kann ein Burst somit auch eine fest vorgegebene Dauer (Burstdauer) haben.

Vorzugsweise ist die Sensoranordnung zum Erfassen mindestens einer ersten Torsion des Rotorblatts basierend auf einer Polarisationsdrehung des ersten Lichts ausgebildet. Durch die Sensoranordnung wird also insbesondere eine Torsionsmessung innerhalb einer Metrologie-Kette realisiert.

Durch die Erfindung wird mit einer einfach und zuverlässig aufgebauten Sensoranordnung eine verbesserte Detektion mindestens einer ersten Verformung (z. B. Durchbiegung und/oder Torsion) ermöglicht. Bei der Detektion kann eine Störung, die durch Umwelteinflüsse (z. B. Umgebungslicht, Licht anderer Messsysteme, Störung elektrischer Art durch einen Generator, etc.) hervorgerufen wird, effizient unterdrückt werden. Die Unterdrückung der Störung ist insbesondere dann besonders effizient, wenn die Störung nahe bei oder im Wesentlichen auf einer (festen) Frequenz der Erzeugung bzw. Modulation der Lichtpulse innerhalb einer Pulsfolge bei einem Referenz-Pulsschema liegen würde. Eine Überlagerung der Störung und der Pulsfolge bzw. ein Einkoppeln der Störung bei der Detektion können insbesondere optisch oder elektronisch erfolgen. Die Erfindung ermöglicht somit die verbesserte Detektion für den Fall des Vorhandenseins einer vorgenannten Störung.

Vorteilhafte Ausbildungen der Erfindung entnimmt man den abhängigen Ansprüchen.

Weitere Einzelheiten und Vorteile der vorliegenden Erfindung werden anhand der nachfolgenden Beschreibung von Ausführungsbeispielen der Erfindung in Verbindung mit den Figuren erläutert.

### KURZE BESCHREIBUNG DER ZEICHNUNGEN

Es zeigen
- Figur 1: eine perspektivische Ansicht eines beispielhaften Rotorblatts zur Veranschaulichung einer ersten und zweiten Torsion des Rotorblatts;
- Figur 2: eine perspektivische Ansicht eines beispielhaften Rotorblatts mit einer beispielhaften Sensoranordnung mit einer Sendeeinheit, mehreren Sende-Empfangs-Einheiten und einer Empfangseinheit zur Bildung einer Metrologie-Kette;
- Figur 3: ein Blockdiagramm der Sendeeinheit, der Sende-Empfangs-Einheiten und der Empfangseinheit nach Figur 2;
- Figur 4a: ein Blockdiagramm einer beispielhaften Sendeeinheit nach Figur 3;
- Figur 4b: ein Blockdiagramm einer beispielhaften ersten Sende-Empfangs-Einheit der Sende-Empfangs-Einheiten nach Figur 3;
- Figur 4c: ein Blockdiagramm einer beispielhaften zweiten Sende-Empfangs-Einheit der Sende-Empfangs-Einheiten nach Figur 3;
- Figur 4d: ein Blockdiagramm einer beispielhaften Empfangseinheit nach Figur 3;
- Figur 5a: ein Blockdiagramm einer beispielhaften (alternativen) Sendeeinheit nach Figur 3;
- Figur 5b: ein Blockdiagramm einer beispielhaften (alternativen) ersten Sende-Empfangs-Einheit der Sende-Empfangs-Einheiten nach Figur 3;
- Figur 6a: ein beispielhaftes erstes Pulsschema mit einer beispielhaften Pulsfolge;
- Figur 6b: ein beispielhaftes erstes Detektionsschema in Verbindung mit dem ersten Pulsschema;
- Figur 6c: ein beispielhaftes zweites Detektionsschema in Verbindung mit dem ersten Pulsschema;
- Figur 7a: ein beispielhaftes zweites Pulsschema mit einer beispielhaften (alternativen) Pulsfolge;
- Figur 7b: ein beispielhaftes drittes Detektionsschema in Verbindung mit dem zweiten Pulsschema;
- Figur 8a: ein beispielhaftes erstes Auswertungsschema in Verbindung mit dem ersten Detektionsschema;
- Figur 8b: ein beispielhaftes zweites Auswertungsschema in Verbindung mit dem zweiten Detektionsschema; und
- Figur 8c: ein beispielhaftes drittes Auswertungsschema in Verbindung mit dem dritten Detektionsschema.

### BESCHREIBUNG DER AUSFÜHRUNGSFORMEN

Gleiche Elemente oder funktionell gleiche Elemente sind in den Figuren mit gleichen Bezugszeichen versehen.

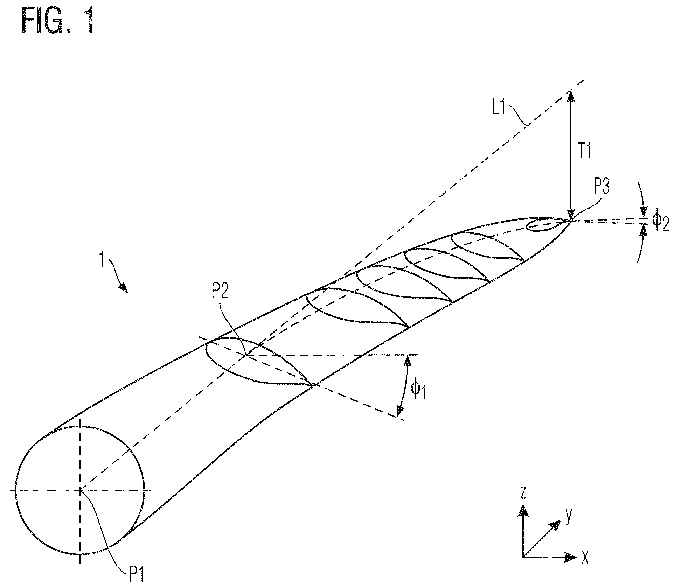

Figur 1 zeigt eine perspektivische Ansicht eines beispielhaften Rotorblatts 1 zur Veranschaulichung einer ersten und zweiten Torsion ϕ₁, ϕ₂ des Rotorblatts 1. Das Rotorblatt 1 hat eine Längsachse L1. Die erste Torsion ϕ₁ ist in Bezug auf eine erste Position P1 und eine zweite Position P2 definiert. Die zweite Torsion ϕ₂ ist in Bezug auf die zweite Position P2 und eine dritte Position P3 definiert. Die erste bis dritte Position P1 bis P3 sind entlang einer Längserstreckung des Rotorblatts 1 jeweils in einem Abstand voneinander angeordnet.

Wie in Figur 1 gezeigt, hat das Rotorblatt 1 eine vorbestimmte Biegung T1 (Prebend). Die vorbestimmte Biegung T1 ist in Bezug auf die Längsachse L1 definiert. Beispielsweise erstreckt sich die vorbestimmte Biegung T1 in negativer Z-Richtung (vgl. Figur 1).

Eine erste Richtung (X-Richtung) bzw. eine Koordinatenachse X ist senkrecht zur Längsachse L1. Eine zweite Richtung (Z-Richtung) bzw. eine Koordinatenachse Z ist durch die vorbestimmte Biegung T1 des Rotorblatts 1 definiert. Eine dritte Richtung (Y-Richtung) bzw. eine Koordinatenachse Y ist parallel zur Längsachse L1. Durch die erste bis dritte Richtung (Koordinatenachse X, Z, Y) wird das in Figur 1 gezeigte Koordinatensystem gebildet.

Die erste Position P1 entspricht beispielsweise einer Position an oder nahe einer Blattwurzel des Rotorblatts 1. Die dritte Position P3 entspricht beispielsweise einer Position an oder nahe einer Blattspitze des Rotorblatts 1. Die zweite Position P2 entspricht beispielsweise einer Position innerhalb des Rotorblatts 1. Beispielsweise ist die zweite Position P2 zwischen der ersten und dritten Position P1, P3 angeordnet.

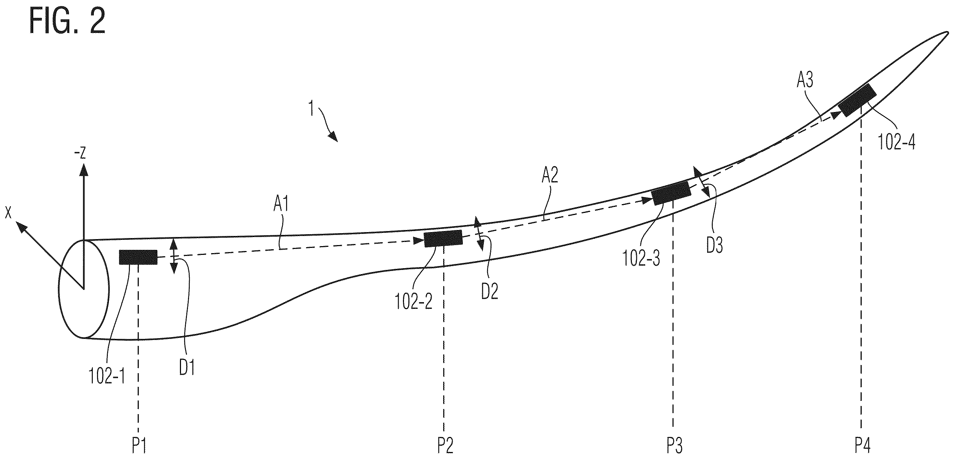

Eine beispielhafte Sensoranordnung wird nachfolgend anhand der Figuren 2 und 3 sowie 4a bis 4d bzw. 5a und 5b erläutert. Die beispielhafte Sensoranordnung dient zum Erfassen mindestens einer ersten Verformung (hier Torsion ϕ₁; vgl. Figur 1).

In den Figuren 2 und 3 sowie 4a bis 4d bzw. 5a und 5b sind insbesondere Einzelheiten einer Metrologie-Kette dargestellt. Wie in Figur 2 zu erkennen, ist die Metrologie-Kette in einem gebogenen Rotorblatt 1 vorgesehen.

In Figur 2 sind vier verschiedene Positionen P1 bis P4 gezeigt. Die erste Position P1 in Figur 2 entspricht insbesondere der ersten Position P1 in Figur 1. Die zweite bis vierte Position P2 bis P4 in Figur 2 entsprechen mehreren entlang einer Längserstreckung des Rotorblatts 1 angeordneten Positionen. Die erste und zweite Position P1, P2 sind in einem ersten Abstand (erste Sichtlinie A1) voneinander angeordnet. Die zweite und dritte Position P2, P3 sind in einem zweiten Abstand (zweite Sichtlinie A2) voneinander angeordnet. Die dritte und vierte Position P3, P4 sind in einem dritten Abstand (dritte Sichtlinie A3) voneinander angeordnet. Durch die erste bis dritte Sichtlinie A1 bis A3 wird eine Kurve gebildet. Diese Kurve entspricht im Wesentlichen einer Biegelinie des Rotorblatts 1. Wie in Figur 2 beispielhaft dargestellt, ist das Rotorblatt 1 in negativer Z-Richtung gebogen.

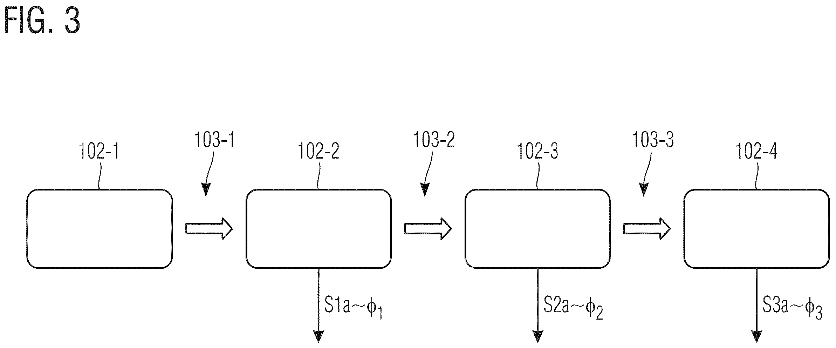

Die beispielhafte Sensoranordnung (vgl. Figur 2) weist eine an der ersten Position P1 angeordnete Sendeeinheit 102-1, mehrere entlang der Biegelinie des Rotorblatts 1 an der zweiten und dritten Position P2, P3 angeordnete Sende-Empfangs-Einheiten (d. h. erste und zweite Sende-Empfangs-Einheit 102-2, 102-3) und eine an der vierten Position P4 angeordnete Empfangseinheit 102-4 auf. Die durch die Sendeeinheit 102-1, die erste und zweite Sende-Empfangs-Einheit 102-2, 102-3 und die Empfangseinheit 102-4 gebildete Metrologie-Kette ist in Figur 3 schematisch dargestellt.

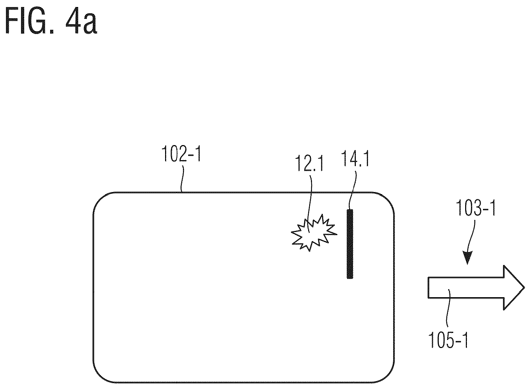

Mit Bezug auf Figur 4a umfasst die Sendeeinheit 102-1 eine erste Lichtquelle 12.1 zum Erzeugen von Licht und einen in Lichtausbreitungsrichtung nach der ersten Lichtquelle 12.1 angeordneten ersten sendeseitigen Polarisator 14.1 zum Erzeugen von linear polarisiertem Licht als erstes Licht 105-1.

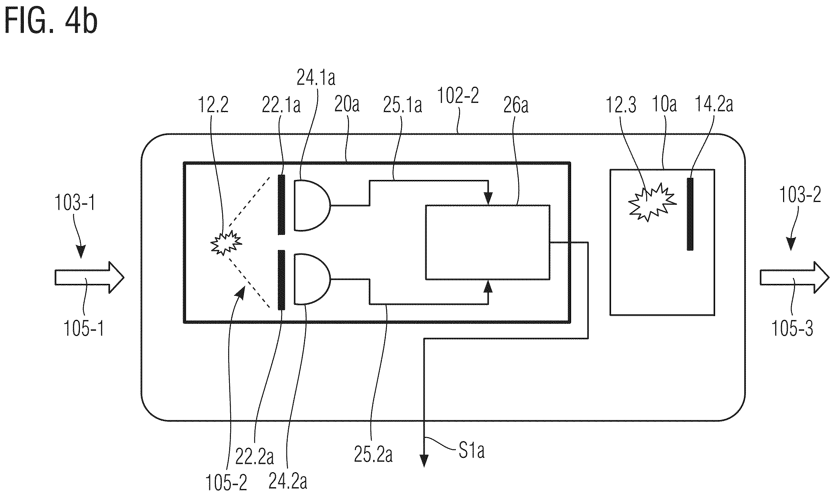

Mit Bezug auf Figur 4b umfasst die erste Sende-Empfangs-Einheit 102-2 ein erstes Detektorelement 24.1a und ein zweites Detektorelement 24.2a. Das erste Detektorelement 24.1a und das zweite Detektorelement 24.2a sind derart angeordnet und ausgebildet, dass sie zumindest das erste Licht 105-1 empfangen. Das erste und zweite Detektorelement 24.1a, 24.2a sind in einer Ebene (d. h. X-Z-Ebene) nebeneinander angeordnet.

Die erste Sende-Empfangs-Einheit 102-2 nach Figur 4b umfasst einen in Lichtausbreitungsrichtung vor dem ersten Detektorelement 24.1a angeordneten ersten empfangsseitigen Polarisator 22.1a und einen in Lichtausbreitungsrichtung vor dem zweiten Detektorelement 24.2a angeordneten zweiten empfangsseitigen Polarisator 22.2a. Eine Orientierung einer Polarisationsebene des ersten empfangsseitigen Polarisators 22.1a und eine Orientierung einer Polarisationsebene des zweiten empfangsseitigen Polarisators 22.2a sind voneinander verschieden.

Der erste sendeseitige Polarisator 14.1 und der erste und zweite empfangsseitige Polarisator 22.1a, 22.2a können auch als Linearpolarisatoren bezeichnet werden. Vorzugsweise sind die Orientierung der Polarisationsebene des ersten empfangsseitigen Polarisators 22.1a und die Orientierung der Polarisationsebene des zweiten empfangsseitigen Polarisators 22.2a im Wesentlichen senkrecht zueinander (d. h. Winkel von ca. 90°).

Die erste Sende-Empfangs-Einheit 102-2 nach Figur 4b weist eine zweite Lichtquelle 12.2 zum Erzeugen von unpolarisiertem Licht als zweites Licht 105-2 auf. Wie in Figur 4b gezeigt, sind das erste Detektorelement 24.1a und das zweite Detektorelement 24.2a derart angeordnet und ausgebildet, dass sie das zweite Licht 105-2 empfangen. Das erste und zweite Detektorelement 24.1a, 24.2a dienen einerseits zum Empfangen des ersten Lichts 105-1 in Form von linear polarisiertem Licht und andererseits zum Empfangen des zweiten Lichts 105-2 in Form von unpolarisiertem Licht.

Mit Bezug auf Figur 4b weist die erste Sende-Empfangs-Einheit 102-2 eine Auswerteeinheit 26a zum Erzeugen eines ein Maß der ersten Torsion ϕ₁ darstellenden Ausgangssignals S1a in Abhängigkeit eines von dem ersten Detektorelement 24.1a erzeugten ersten Messsignals 25.1a und in Abhängigkeit eines von dem zweiten Detektorelement 24.2a erzeugten zweiten Messsignals 25.2a auf.

Durch die Auswerteeinheit 26a erfolgt beispielsweise die Bildung eines Quotienten aus der Differenz und der Summe des ersten und zweiten Messsignals 25.1a, 25.2a.

Wie in Figur 4b zu erkennen, umfasst die erste Sende-Empfangs-Einheit 102-2 eine dritte Lichtquelle 12.3 zum Erzeugen von drittem Licht 105-3 und einen in Lichtausbreitungsrichtung nach der dritten Lichtquelle 12.3 angeordneten zweiten sendeseitigen Polarisator 14.2a. Die dritte Lichtquelle 12.3 und der zweite sendeseitige Polarisator 14.2a sind dazu ausgebildet, linear polarisiertes Licht als drittes Licht 105-3 zu erzeugen.

Durch das erste und zweite Detektorelement 24.1a, 24.2a, den ersten und zweiten empfangsseitigen Polarisator 22.1a, 22.2a und die Auswerteeinheit 26a wird eine Empfangseinheit 20a gebildet. Durch die dritte Lichtquelle 12.3 und den zweiten sendeseitigen Polarisator 14.2a wird eine Sendeeinheit 10a gebildet.

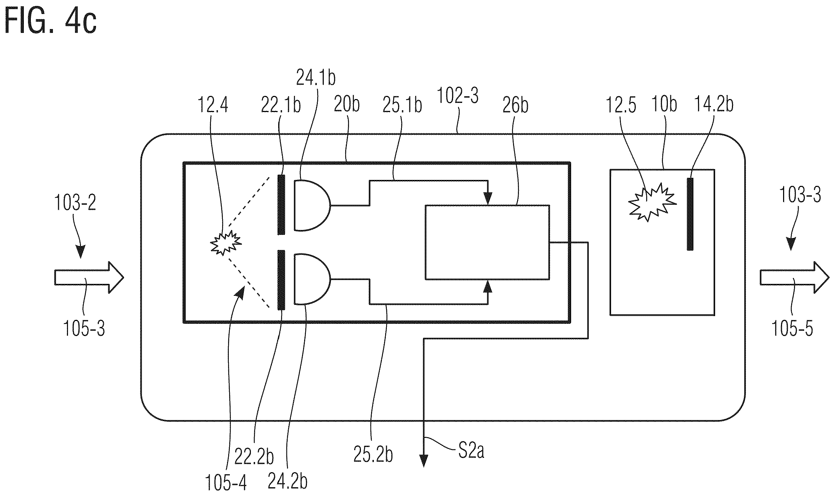

Die zweite Sende-Empfangs-Einheit 102-3 nach Figur 4c ist analog zur ersten Sende-Empfangs-Einheit 102-2 nach Figur 4b ausgebildet. Die zweite Sende-Empfangs-Einheit 102-3 umfasst die Einheiten 20b und 10b, die jeweils den Einheiten 20a und 10a in Figur 4b entsprechen. Die Einheit 20b umfasst wiederum die Elemente 24.1b, 24.2b, 22.1b, 22.2b, 26b, die jeweils den Elementen 24.1a, 24.2a, 22.1a, 22.2a, 26a in Figur 4b entsprechen. Die Einheit 10b umfasst wiederum das Element 14.2b, das dem Element 14.2a in Figur 4b entspricht.

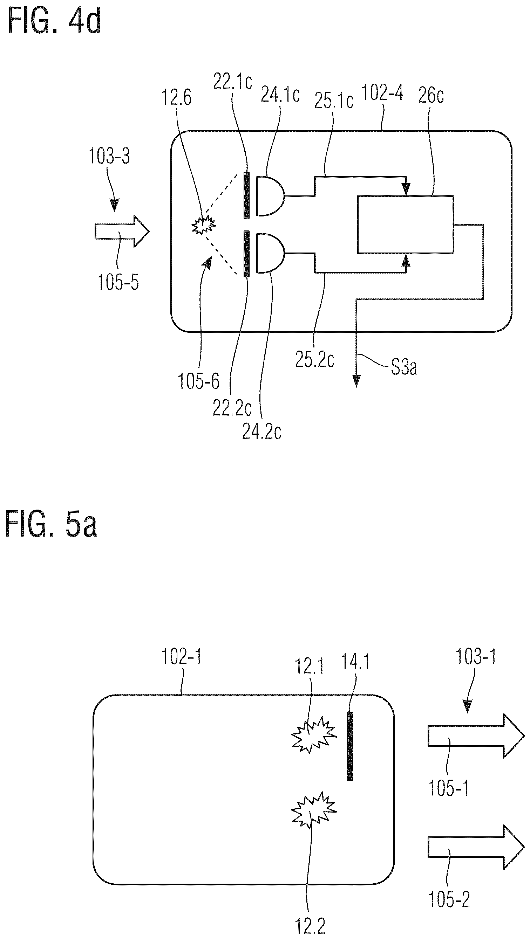

Die Empfangseinheit 102-4 nach Figur 4d ist analog zur Einheit 20a oder 20b in Figur 4b bzw. 4c ausgebildet. Die Einheit 102-4 umfasst die Elemente 24.1c, 24.2c, 22.1c, 22.2c, 26c, die jeweils den Elementen 24.1a, 24.2a, 22.1a, 22.2a, 26a in Figur 4b bzw. den Elementen 24.1b, 24.2b, 22.1b, 22.2b, 26b in Figur 4c entsprechen.

Mit Bezug auf Figur 4c weist die zweite Sende-Empfangs-Einheit 102-3 nach Figur 4c eine vierte Lichtquelle 12.4 zum Erzeugen von viertem Licht 105-4 (d. h. unpolarisiertes Licht) auf. Ferner umfasst die zweite Sende-Empfangs-Einheit 102-3 eine fünfte Lichtquelle 12.5 zum Erzeugen von fünftem Licht 105-5 (d. h. linear polarisiertes Licht). Mit Bezug auf Figur 4d weist die Empfangseinheit 102-4 nach Figur 4d eine sechste Lichtquelle 12.6 zum Erzeugen von sechstem Licht 105-6 (d. h. unpolarisiertes Licht) auf.

Somit dient die beispielhafte Sensoranordnung zum Erzeugen von erstem bis sechstem Licht 105-1 bis 105-6 (vgl. Figur 4a bis 4d).

Die erste Sende-Empfangs-Einheit 102-2 dient zum Erzeugen des das Maß der ersten Torsion ϕ₁ darstellenden Ausgangssignals S1a (vgl. Figur 4b). Die zweite Sende-Empfangs-Einheit 102-3 dient zum Erzeugen eines ein Maß einer zweiten Torsion ϕ₂ darstellenden Ausgangssignals S2a (vgl. Figur 4c). Die Empfangseinheit 102-4 dient zum Erzeugen eines ein Maß einer dritten Torsion ϕ₃ darstellenden Ausgangssignals S3a (vgl. Figur 4d).

Mit Bezug auf Figur 3 können die Sendeeinheit 102-1, die erste und zweite Sende-Empfangs-Einheit 102-2, 102-3 und die Empfangseinheit 102-4 auch als Metrologie-Blöcke bezeichnet werden. Wie in Figur 3 (in Verbindung mit Figur 4a, 4b) schematisch dargestellt, erfolgt zwischen den Metrologie-Blöcken 102-1, 102-2 eine Übertragung des ersten Lichts 105-1 (hier dargestellt als Pfeil mit dem Bezugszeichen 103-1). Ferner ist in Figur 3 (in Verbindung mit Figur 4b, 4c) schematisch dargestellt, dass zwischen den Metrologie-Blöcken 102-2, 102-3 eine Übertragung des dritten Lichts 105-3 erfolgt (hier dargestellt als Pfeil mit dem Bezugszeichen 103-2). Darüber hinaus ist in Figur 3 (in Verbindung mit Figur 4c, 4d) schematisch dargestellt, dass zwischen den Metrologie-Blöcken 102-3, 102-4 eine Übertragung des fünften Lichts 105-5 erfolgt (hier dargestellt als Pfeil mit dem Bezugszeichen 103-3).

Durch die zuvor erläuterte Metrologie-Kette wird eine Verformungs- bzw. Torsionsmessung über mehrere entlang der Biegelinie des Rotorblatts 1 angeordnete Positionen (z. B. Positionen P1 bis P4) erreicht.

Bei dieser Verformungs- bzw. Torsionsmessung ist es vorteilhaft, wenn die erste Lichtquelle 12.1 und der erste sendeseitige Polarisator 14.1 dazu ausgebildet sind, das linear polarisierte Licht als erstes Licht 105-1 derart zu erzeugen, dass eine Polarisationsrichtung des linear polarisierten Lichts parallel oder senkrecht zur zweiten Richtung Z ist. Dies ist in Figur 2 für die erste Sichtlinie A1 durch den Doppelpfeil D1 dargestellt. Analoges gilt für die zweite und dritte Sichtlinie A2, A3 in Figur 2 (Doppelpfeile D2, D3).

Die Sendeeinheit 102-1 nach Figur 5a (alternative Sendeeinheit 102-1) unterscheidet sich von der Sendeeinheit 102-1 nach Figur 4a dadurch, dass sie (zusätzlich zur ersten Lichtquelle 12.1 zum Erzeugen des ersten Lichts 105-1) eine zweite Lichtquelle 12.2 zum Erzeugen von unpolarisiertem Licht als zweites Licht 105-2 aufweist.

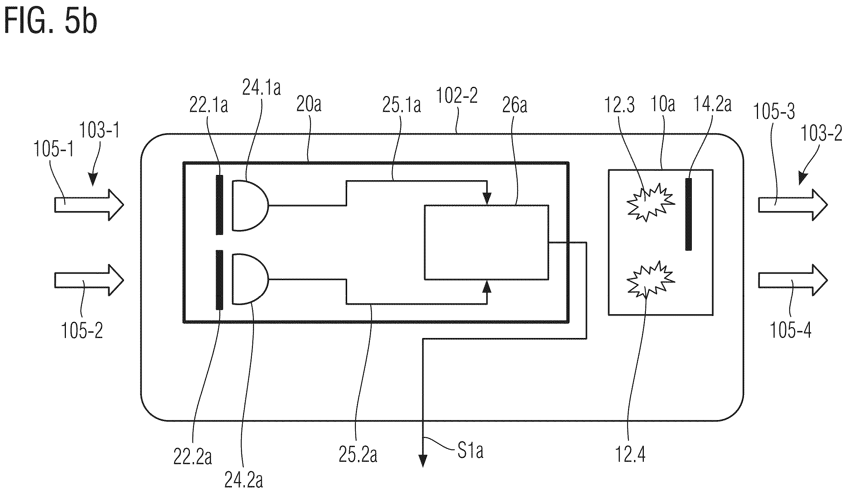

Die erste Sende-Empfangs-Einheit 102-2 nach Figur 5b (alternative erste Sende-Empfangs-Einheit 102-2) unterscheidet sich von der ersten Sende-Empfangs-Einheit 102-2 nach Figur 4b dadurch, dass die Einheit 20a (Empfangseinheit) der ersten Sende-Empfangs-Einheit 102-2 nach Figur 5b nicht die zweite Lichtquelle 12.2 umfasst. Ferner unterscheidet sich die erste Sende-Empfangs-Einheit 102-2 nach Figur 5b von der ersten Sende-Empfangs-Einheit 102-2 nach Figur 4b dadurch, dass die Einheit 10a (Sendeeinheit) der ersten Sende-Empfangs-Einheit 102-2 nach Figur 5b (zusätzlich zur dritten Lichtquelle 12.3 zum Erzeugen des dritten Lichts 105-3) eine vierte Lichtquelle 12.4 zum Erzeugen von unpolarisiertem Licht als viertes Licht 105-4 aufweist.

Mit Bezug auf Figur 3 (in Verbindung mit Figur 5a, 5b) kann in alternativer Weise zwischen den Metrologie-Blöcken 102-1, 102-2 eine Übertragung des ersten und zweiten Lichts 105-1, 105-2 erfolgen (hier dargestellt als zwei Pfeile in Figur 5a, 5b bzw. als ein Pfeil in Figur 3 mit dem Bezugszeichen 103-1).

Eine alternative zweite Sende-Empfangs-Einheit 102-3 (nicht gezeigt) kann analog zur ersten Sende-Empfangs-Einheit 102-2 nach Figur 5b ausgebildet sein. Ferner kann eine alternative Empfangseinheit 102-4 (nicht gezeigt) analog zur Einheit 20a (Empfangseinheit) der ersten Sende-Empfangs-Einheit 102-2 nach Figur 5b ausgebildet sein.

Durch die alternative erste und zweite Sende-Empfangs-Einheit 102-2, 102-3 (Metrologie-Blöcke 102-2, 102-3) kann somit zwischen den Metrologie-Blöcken 102-2, 102-3 eine Übertragung des dritten und vierten Lichts 105-3, 105-4 erfolgen (vgl. Figur 3, Pfeil 103-2; Figur 5b, Pfeile 105-3, 105-4). Ferner kann durch die alternative zweite Sende-Empfangs-Einheit 102-3 und die alternative Empfangseinheit 102-4 (Metrologie-Blöcke 102-3, 102-4) zwischen den Metrologie-Blöcken 102-3, 102-4 eine Übertragung des fünften und sechsten Lichts 105-5, 105-6 (nicht gezeigt) erfolgen (vgl. Figur 3, Pfeil 103-3).

Im Hinblick auf nähere Einzelheiten des Betriebs der Sensoranordnung (vgl. die Auswerteeinheit 26a bis 26c nach Figur 4b bis 4d sowie die Auswerteeinheit 26a nach Figur 5b) wird Bezug genommen auf die Anmeldung EP 4 194 802 A1, deren Inhalt hiermit in diese Anmeldung aufgenommen wird.

Vorzugsweise ist die Sensoranordnung zum Erfassen mindestens der ersten Torsion *ϕ*₁ (bzw. eines Maßes des Winkels *ϕ*₁ der ersten Torsion) des Rotorblatts 1 basierend auf einer Polarisationsdrehung des ersten Lichts 105-1 ausgebildet. In diesem Zusammenhang wird wiederum Bezug genommen auf die oben genannte Anmeldung EP 4 194 802 A1.

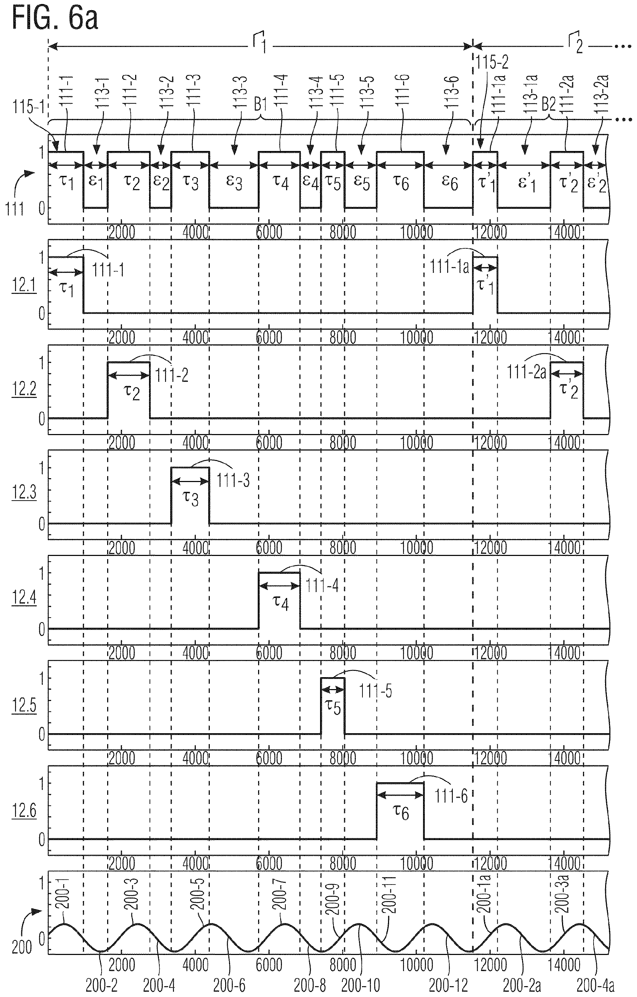

Im Folgenden wird auf die vorherigen Figuren (u. a. Figur 3) in Verbindung mit Figur 6a ff. verwiesen.

Bei der beispielhaften Sensoranordnung ist die Sendeeinheit 102-1 derart ausgebildet, dass das erste Licht 105-1 als ein erster Lichtpuls 111-1 mit einer ersten Pulsdauer *τ*₁ erzeugt wird. Die Sensoranordnung ist derart ausgebildet, dass das zweite Licht 105-2 als ein zweiter Lichtpuls 111-2 mit einer zweiten Pulsdauer *τ*₂ erzeugt wird. Die erste Sende-Empfangs-Einheit 102-2 ist derart ausgebildet, dass das dritte Licht 105-3 als ein dritter Lichtpuls 111-3 mit einer dritten Pulsdauer *τ*₃ erzeugt wird.

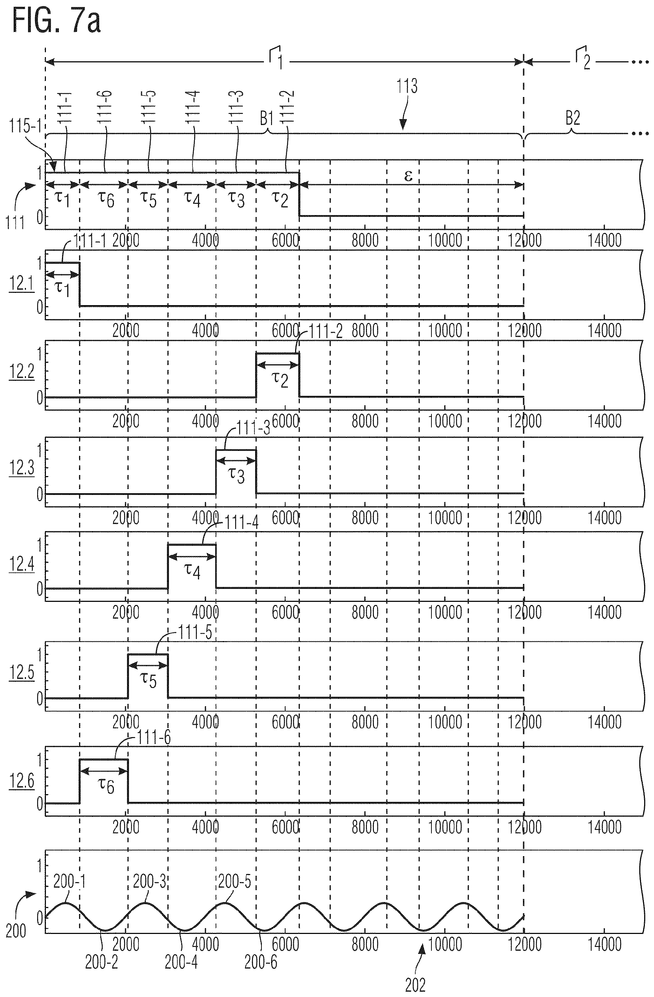

Die Sensoranordnung kann zudem derart ausgebildet sein, dass das vierte bis sechste Licht 105-4 bis 105-6 als ein vierter bis sechster Lichtpuls 111-4 bis 111-6 mit einer vierten bis sechsten Pulsdauer *τ*₄ bis *τ*₆ erzeugt werden. Dies ist in Figur 6a bzw. 7a beispielhaft dargestellt.

Figur 6a zeigt ein beispielhaftes erstes Pulsschema mit einer beispielhaften Pulsfolge 111. Die Pulsfolge 111 umfasst eine erste Gruppe 115-1 von Lichtpulsen. Ferner umfasst die Pulsfolge 111 mindestens eine zweite (nachfolgende) Gruppe 115-2 von Lichtpulsen. Die erste Gruppe 115-1 von Lichtpulsen umfasst den ersten bis sechsten Lichtpuls 111-1 bis 111-6. Die zweite Gruppe 115-2 von Lichtpulsen umfasst mindestens einen dem ersten Lichtpuls 111-1 zugeordneten weiteren ersten Lichtpuls 111-1a und einen dem zweiten Lichtpuls 111-2 zugeordneten weiteren zweiten Lichtpuls 111-2a. Der weitere erste Lichtpuls 111-1a hat eine weitere erste Pulsdauer ${τ}_{1}^{′}$. Der weitere zweite Lichtpuls 111-2a hat eine weitere zweite Pulsdauer ${τ}_{2}^{′}$.

Wie in Figur 6a beispielhaft dargestellt, weist die Pulsfolge 111 eine erste Pulspause 113-1 zwischen dem ersten Lichtpuls 111-1 und dem zweiten Lichtpuls 111-2 und eine zweite Pulspause 113-2 zwischen dem zweiten Lichtpuls 111-2 und dem dritten Lichtpuls 111-3 auf. Ferner ist in Figur 6a beispielhaft dargestellt, dass die Pulsfolge 111 eine dritte Pulspause 113-3 zwischen dem dritten Lichtpuls 111-3 und dem vierten Lichtpuls 111-4, eine vierte Pulspause 113-4 zwischen dem vierten Lichtpuls 111-4 und dem fünften Lichtpuls 111-5, eine fünfte Pulspause 113-5 zwischen dem fünften Lichtpuls 111-5 und dem sechsten Lichtpuls 111-6 und eine sechste Pulspause 113-6 nach dem sechsten Lichtpuls 111-6 aufweist.

Darüber hinaus ist in Figur 6a beispielhaft dargestellt, dass die Pulsfolge 111 mindestens eine weitere erste Pulspause 113-1a zwischen dem weiteren ersten Lichtpuls 111-1a und dem weiteren zweiten Lichtpuls 111-2a und eine weitere zweite Pulspause 113-2a nach dem weiteren zweiten Lichtpuls 111-2a aufweist.

Die erste bis sechste Pulspause 113-1 bis 113-6 haben eine erste bis sechste Dauer *ε*₁ bis *ε*₆ (vgl. Figur 6a). Ferner haben die weitere erste und zweite Pulspause 113-1a, 113-2a eine weitere erste und zweite Dauer ${ε}_{1}^{′} , {ε}_{2}^{′}$ (vgl. Figur 6a). Wie in Figur 6a gezeigt, hat die Pulsfolge 111 einen ersten Abschnitt B1 und mindestens einen zweiten Abschnitt B2. Der erste Abschnitt B1 hat eine Dauer Γ₁ (vgl. Figur 6a). Der zweite Abschnitt B2 hat eine Dauer Γ₂ (vgl. Figur 6a).

Im ersten Pulsschema nach Figur 6a ist die beispielhafte Pulsfolge 111 in der obersten Zeile dargestellt. In den Zeilen unterhalb der obersten Zeile sind der erste bis sechste Lichtpuls 111-1 bis 111-6 mit der ersten bis sechsten Pulsdauer *τ*₁ bis *τ*₆ sowie der weitere erste und zweite Lichtpuls 111-1a, 111-2a mit der weiteren ersten und zweiten Pulsdauer ${τ}_{1}^{′} , {τ}_{2}^{′}$ dargestellt (vgl. die Bezugszeichen 12.1 bis 12.6). Durch die einzelnen Lichtpulse (d. h. erster bis sechster Lichtpuls 111-1 bis 111-6 bzw. weiterer erster und zweiter Lichtpuls 111-1a, 111-2a) wird die beispielhafte Pulsfolge 111 gebildet. Die einzelnen Lichtpulse werden wiederum durch die erste bis sechste Lichtquelle 12.1 bis 12.6 erzeugt.

Im ersten Pulsschema nach Figur 6a ist zudem eine beispielhafte Störung 200 in der untersten Zeile dargestellt. Die beispielhafte Störung 200 hat einen ersten bis zwölften Abschnitt 200-1 bis 200-12 und einen weiteren ersten bis vierten Abschnitt 200-1a bis 200-4a. Wie in Figur 6a gezeigt, hat die beispielhafte Störung 200 einen sinusförmigen Verlauf.

In den einzelnen Zeilen des ersten Pulsschemas nach Figur 6a sind jeweils auf der Abszissenachse die Zeit (in a.u.) und auf der Ordinatenachse die Amplitude (in a.u.) eingetragen.

Mit Bezug auf Figur 6a ist die Sensoranordnung dazu ausgebildet, die erste bis sechste Pulsdauer *τ*₁ bis *τ*₆ jeweils zufällig festzulegen, ohne dass die Verteilung (d. h. Reihenfolge des ersten bis sechsten Lichtpulses 111-1 bis 111-6) zufällig ausgewählt wird.

Wie in Figur 6a gezeigt, umfasst die Verteilung eine Reihenfolge, wobei die Reihenfolge durch den ersten Lichtpuls 111-1 als Anfangspuls, den zweiten Lichtpuls 111-2, der auf den ersten Lichtpuls 111-1 folgt, und den dritten Lichtpuls 111-3, der auf den zweiten Lichtpuls 111-2 folgt, bestimmt ist. Ferner ist in Figur 6a gezeigt, dass der vierte bis sechste Lichtpuls 111-4 bis 111-6 jeweils aufeinanderfolgende Lichtpulse sind, die auf den dritten Lichtpuls 111-3 folgen.

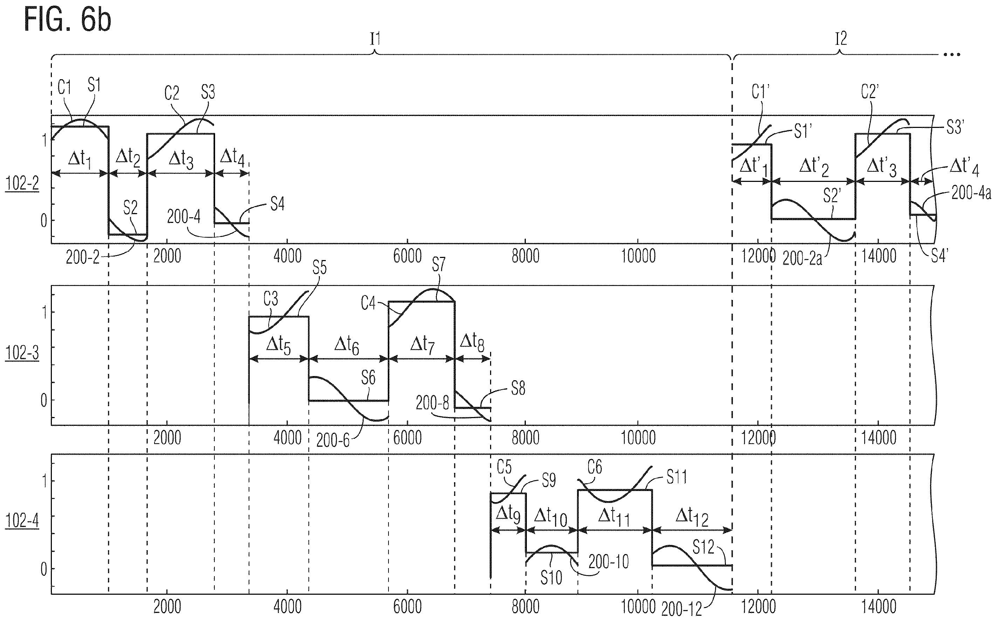

Figur 6b zeigt ein beispielhaftes erstes Detektionsschema in Verbindung mit dem ersten Pulsschema. In den einzelnen Zeilen des ersten Detektionsschemas nach Figur 6b sind jeweils auf der Abszissenachse die Zeit (in a.u.) und auf der Ordinatenachse die Amplitude (in a.u.) eingetragen. In Figur 6b sind ein erster und zweiter Abschnitt I1, I2 des ersten Detektionsschemas gezeigt. Der erste Abschnitt I1 in Figur 6b entspricht dem ersten Abschnitt B1 mit der Dauer Γ₁ in Figur 6a. Der zweite Abschnitt I2 in Figur 6b entspricht dem zweiten Abschnitt B2 mit der Dauer Γ₂ in Figur 6a.

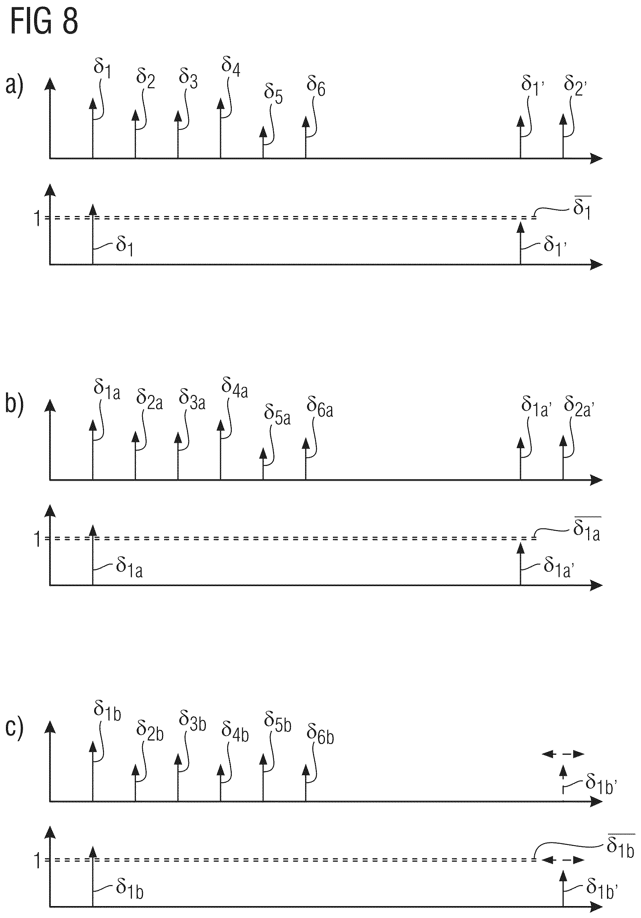

In den Zeilen des ersten Detektionsschemas nach Figur 6b sind eine erste bis zwölfte Signalamplitude S1 bis S12 sowie eine weitere erste bis vierte Signalamplitude S1' bis S4' dargestellt (vgl. die Bezugszeichen 102-2 bis 102-4). Durch die einzelnen Signalamplituden (d. h. erste bis zwölfte Signalamplitude S1 bis S12 bzw. weitere erste bis vierte Signalamplitude S1' bis S4') wird eine Mehrzahl von Signalamplituden für eine Auswertung nach einem beispielhaften ersten Auswertungsschema (vgl. Figur 8a) gebildet. Die einzelnen Signalamplituden werden wiederum durch die erste und zweite Sende-Empfangs-Einheit 102-2, 102-3 und die Empfangseinheit 102-4 erhalten.

Mit Bezug auf Figur 6a und 6b ist die Sensoranordnung derart ausgebildet, dass die erste Signalamplitude S1 durch eine zeitliche Mittelung eines ersten Summensignals C1 über eine der ersten Pulsdauer *τ*₁ entsprechende erste Zeitdauer Δ*t*₁ erfasst wird, wobei das erste Summensignal C1 auf dem ersten Lichtpuls 111-1 und dem ersten Abschnitt 200-1 der Störung 200 basiert (z. B. Summation oder Überlagerung). Ferner ist die Sensoranordnung derart ausgebildet, dass die zweite Signalamplitude S2 durch eine zeitliche Mittelung des zweiten Abschnitts 200-2 der Störung 200 über eine der ersten Pulspause 113-1 entsprechende zweite Zeitdauer Δ*t*₂ erfasst wird. Ferner ist die Sensoranordnung derart ausgebildet, dass die dritte Signalamplitude S3 durch eine zeitliche Mittelung eines zweiten Summensignals C2 über eine der zweiten Pulsdauer *τ*₂ entsprechende dritte Zeitdauer Δ*t*₃ erfasst wird, wobei das zweite Summensignal C2 auf dem zweiten Lichtpuls 111-2 und dem dritten Abschnitt 200-3 der Störung 200 basiert (z. B. Summation oder Überlagerung). Darüber hinaus ist die Sensoranordnung derart ausgebildet, dass die vierte Signalamplitude S4 durch eine zeitliche Mittelung des vierten Abschnitts 200-4 der Störung 200 über eine der zweiten Pulspause 113-2 entsprechende vierte Zeitdauer Δ*t*₄ erfasst wird.

Wiederum mit Bezug auf Figur 6a und 6b erfolgt die Erfassung der fünften bis achten Signalamplitude S5 bis S8 bzw. der neunten bis zwölften Signalamplitude S9 bis S12 in analoger Weise.

Mit Bezug auf Figur 8a ist die Sensoranordnung derart ausgebildet, dass eine erste korrigierte Signalamplitude *δ*1 basierend auf der ersten Signalamplitude S1 und der zweiten Signalamplitude S2 (z. B. durch Differenzbildung *δ*1 = S1 - *S*2) ermittelt wird. Ferner ist die Sensoranordnung derart ausgebildet, dass eine zweite korrigierte Signalamplitude *δ*2 basierend auf der dritten Signalamplitude S3 und der vierten Signalamplitude S4 (z. B. durch Differenzbildung *δ*2 = S3 - S4) ermittelt wird.

Wiederum mit Bezug auf Figur 8a erfolgt die Ermittlung einer dritten bis sechsten korrigierten Signalamplitude 63 bis *δ*6 in analoger Weise (z. B. durch Differenzbildung *δ*3 = *S*5 - *S*6; *δ*4 = *S*7 - *S*8; *δ*5 = *S*9 - *S*10; *δ*6 = *S*11 - S12).

Mit Bezug auf Figur 6a und 6b ist die Sensoranordnung derart ausgebildet, dass die weitere erste Signalamplitude S1' durch eine zeitliche Mittelung eines weiteren ersten Summensignals C1' über eine der weiteren ersten Pulsdauer ${τ}_{1}^{′}$ entsprechende weitere erste Zeitdauer $Δ {t}_{1}^{′}$ erfasst wird, wobei das weitere erste Summensignal C1' auf dem weiteren ersten Lichtpuls 111-1a und dem weiteren ersten Abschnitt 200-1a der Störung 200 basiert (z. B. Summation oder Überlagerung). Ferner ist die Sensoranordnung derart ausgebildet, dass die weitere zweite Signalamplitude S2' durch eine zeitliche Mittelung des weiteren zweiten Abschnitts 200-2a der Störung 200 über eine der weiteren ersten Pulspause 113-1a entsprechende weitere zweite Zeitdauer $Δ {t}_{2}^{′}$ erfasst wird. Ferner ist die Sensoranordnung derart ausgebildet, dass die weitere dritte Signalamplitude S3' durch eine zeitliche Mittelung eines weiteren zweiten Summensignals C2' über eine der weiteren zweiten Pulsdauer ${τ}_{2}^{′}$ entsprechende weitere dritte Zeitdauer $Δ {t}_{3}^{′}$ erfasst wird, wobei das weitere zweite Summensignal C2' auf dem weiteren zweiten Lichtpuls 111-2a und dem weiteren dritten Abschnitt 200-3a der Störung 200 basiert (z. B. Summation oder Überlagerung). Darüber hinaus ist die Sensoranordnung derart ausgebildet, dass die weitere vierte Signalamplitude S4' durch eine zeitliche Mittelung des weiteren vierten Abschnitts 200-4a der Störung 200 über eine der weiteren zweiten Pulspause 113-2a entsprechende weitere vierte Zeitdauer $Δ {t}_{4}^{′}$ erfasst wird.

Mit Bezug auf Figur 8a ist die Sensoranordnung derart ausgebildet, dass eine weitere erste korrigierte Signalamplitude *δ*1' basierend auf der weiteren ersten Signalamplitude S1' und der weiteren zweiten Signalamplitude S2' (z. B. durch Differenzbildung *δ*1' = *S*1' - *S*2') ermittelt wird. Ferner ist die Sensoranordnung derart ausgebildet, dass eine weitere zweite korrigierte Signalamplitude *δ*2' basierend auf der weiteren dritten Signalamplitude S3' und der weiteren vierten Signalamplitude S4' (z. B. durch Differenzbildung *δ*2' *= S3' -* S4') ermittelt wird.

Beim ersten Auswertungsschema nach Figur 8a wird eine gemittelte Signalamplitude *̅δ̅*̅1̅ basierend auf mindestens der ersten Signalamplitude S1 und der weiteren ersten Signalamplitude S1' (z. B. durch Mittelwertbildung mindestens der ersten korrigierten Signalamplitude *δ*1 und der weiteren ersten korrigierten Signalamplitude *δ*1') ermittelt. Dies ist anhand von Figur 8a beispielhaft dargestellt.

Für die oben genannte beispielhafte Mittelwertbildung können auch weitere erste korrigierte Signalamplituden in weiteren (aufeinanderfolgenden) Abschnitten B3, B4, etc. (nicht gezeigt) des ersten Detektionsschemas genutzt werden.

Beim ersten Auswertungsschema nach Figur 8a können in analoger Weise auch weitere gemittelte Signalamplituden *̅δ̅*̅2̅ bis *̅δ̅*̅6̅ (nicht gezeigt) ermittelt werden.

Durch die Sensoranordnung kann basierend auf den gemittelten Signalamplituden *̅δ̅*̅1̅ und *̅δ̅*̅2̅ das Ausgangssignal S1a (vgl. Figur 3) ermittelt werden. Ferner kann durch die Sensoranordnung basierend auf den gemittelten Signalamplituden *̅δ̅*̅3̅ und *̅δ̅*̅4̅ das Ausgangssignal S2a (vgl. Figur 3) ermittelt werden. Darüber hinaus kann durch die Sensoranordnung basierend auf den gemittelten Signalamplituden *̅δ̅*̅5̅ und *̅δ̅*̅6̅ das Ausgangssignal S3a (vgl. Figur 3) ermittelt werden.

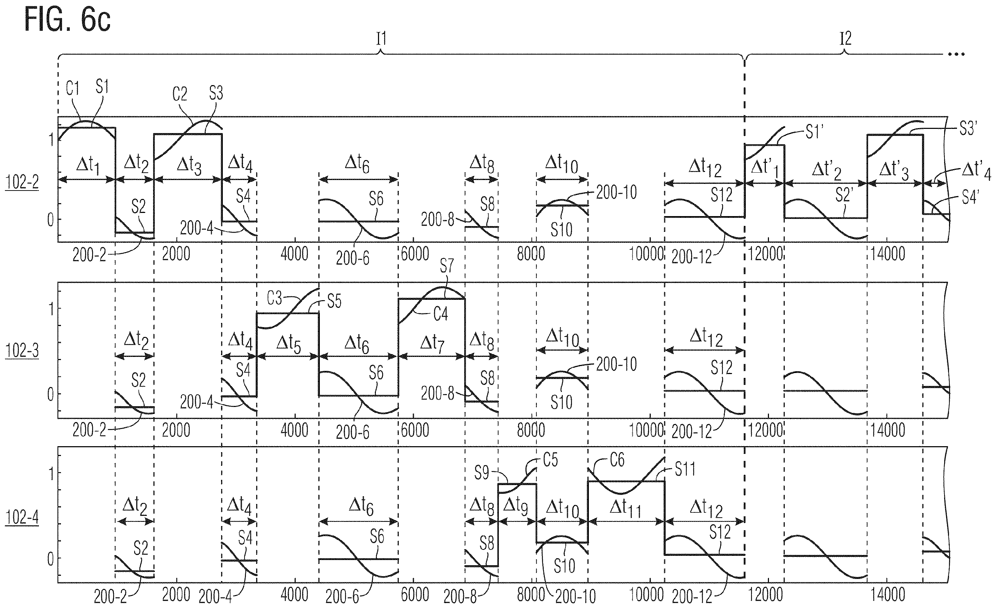

Figur 6c zeigt ein beispielhaftes zweites Detektionsschema in Verbindung mit dem ersten Pulsschema. In den einzelnen Zeilen des zweiten Detektionsschemas nach Figur 6c sind jeweils auf der Abszissenachse die Zeit (in a.u.) und auf der Ordinatenachse die Amplitude (in a.u.) eingetragen.

In den Zeilen des zweiten Detektionsschemas nach Figur 6c sind eine erste bis zwölfte Signalamplitude S1 bis S12 sowie eine weitere erste bis vierte Signalamplitude S1' bis S4' dargestellt (vgl. die Bezugszeichen 102-2 bis 102-4). Durch die einzelnen Signalamplituden (d. h. erste bis zwölfte Signalamplitude S1 bis S12 bzw. weitere erste bis vierte Signalamplitude S1' bis S4') wird eine Mehrzahl von Signalamplituden für eine Auswertung nach einem beispielhaften zweiten Auswertungsschema (vgl. Figur 8b) gebildet. Die einzelnen Signalamplituden werden wiederum durch die erste und zweite Sende-Empfangs-Einheit 102-2, 102-3 und die Empfangseinheit 102-4 erhalten.

Das zweite Detektionsschema nach Figur 6c unterscheidet sich von dem ersten Detektionsschema nach Figur 6b dadurch, dass in allen Zeilen (vgl. die Bezugszeichen 102-2 bis 102-4) jeweils die zweite, vierte, usw. bis zwölfte Signalamplitude S2, S4, S6, S8, S10, S12 erhalten werden. Die zweite, vierte, usw. bis zwölfte Signalamplitude S2, S4, S6, S8, S10, S12 entsprechen den Signalamplituden, die durch eine zeitliche Mittelung des zweiten, vierten, usw. bis zwölften Abschnitts 200-2, 200-4, 200-6, 200-8, 200-10, 200-12 der Störung 200 über eine der ersten bis sechsten Pulspause 113-1 bis 113-6 entsprechende zweite, vierte, usw. bis zwölfte Zeitdauer Δ*t*₂, Δ*t*₄, Δ*t*₆, Δ*t*₈, Δ*t*₁₀, Δ*t*₁₂ erfasst werden.

Das zweite Auswertungsschema nach Figur 8b unterscheidet sich von dem ersten Auswertungsschema nach Figur 8a dadurch, dass jede korrigierte Signalamplitude *δ*1*a* bis *δ*6*a* bzw. weitere korrigierte Signalamplitude *δ*1*a'*, *δ*2*a'* basierend auf der jeweiligen Signalamplitude (d. h. erste bis elfte Signalamplitude S1, S3, S5, S7, S9, S11) und einem Mittelwert der zweiten bis zwölften (weiteren) Signalamplitude S2, S4, S6, S8, S10, S12 bzw. S2', S4', etc. ermittelt wird. Dies erfolgt z. B. durch Differenzbildung *δ*1*a* = S1 - *MW*1; *δ*2*a* = *S3 - MW*1; *δ*3*a* = *S*5 - *MW*2; *δ*4*a* = *S7 - MW*2; *δ*5*a* = S9 - *MW*3; *δ*6*a* = S11 *- MW*3 bzw. *δ*1*a'* = *S*1' - *MW*1'; *δ*2*a'* = *S*3' *- MW*1', wobei MW1 der Mittelwert von S2, S4, S6, S8, S10, S12 (obere Zeile; Bezugszeichen 102-2), MW2 der Mittelwert von S2, S4, S6, S8, S10, S12 (mittlere Zeile; Bezugszeichen 102-3), MW3 der Mittelwert von S2, S4, S6, S8, S10, S12 (untere Zeile; Bezugszeichen 102-4) und MW1' der Mittelwert von S2', S4', etc. (obere Zeile; Bezugszeichen 102-2) sind.

Beim zweiten Auswertungsschema nach Figur 8b wird eine gemittelte Signalamplitude *̅δ̅*̅1̅*̅a̅*̅ basierend auf mindestens der ersten Signalamplitude S1 und der weiteren ersten Signalamplitude S1' (z. B. durch Mittelwertbildung mindestens der ersten korrigierten Signalamplitude *δ*1*a* und der weiteren ersten korrigierten Signalamplitude *δ*1*a'* ermittelt. Dies ist anhand von Figur 8b beispielhaft dargestellt.

Beim zweiten Auswertungsschema nach Figur 8b können in analoger Weise auch weitere gemittelte Signalamplituden *̅δ̅*̅2̅*̅a̅*̅ bis *̅δ̅*̅6̅*̅a̅*̅ (nicht gezeigt) ermittelt werden.

Durch die Sensoranordnung kann basierend auf den gemittelten Signalamplituden *̅δ̅*̅1̅*̅a̅*̅ und *̅δ̅*̅2̅*̅a̅*̅ das Ausgangssignal S1a (vgl. Figur 3) ermittelt werden. Ferner kann durch die Sensoranordnung basierend auf den gemittelten Signalamplituden *̅δ̅*̅3̅*̅a̅*̅ und *̅δ̅*̅4̅*̅a̅*̅ das Ausgangssignal S2a (vgl. Figur 3) ermittelt werden. Darüber hinaus kann durch die Sensoranordnung basierend auf den gemittelten Signalamplituden *̅δ̅*̅5̅*̅a̅*̅ und *̅δ̅*̅6̅*̅a̅*̅ das Ausgangssignal S3a (vgl. Figur 3) ermittelt werden.

Figur 7a zeigt ein beispielhaftes zweites Pulsschema mit einer beispielhaften (alternativen) Pulsfolge 111. Die alternative Pulsfolge 111 umfasst eine erste Gruppe 115-1 von Lichtpulsen. Die erste Gruppe 115-1 von Lichtpulsen umfasst den ersten bis sechsten Lichtpuls 111-1 bis 111-6 (Pulsdauern *τ*₁ bis *τ*₆). Die zweite (nachfolgende) Gruppe 115-2 von Lichtpulsen ist in Figur 7a nicht gezeigt.

Wie in Figur 7a beispielhaft dargestellt, weist die alternative Pulsfolge 111 eine Pulspause 113 nach dem zweiten Lichtpuls 111-2 auf. Die Pulspause 113 hat eine Dauer *ε* (vgl. Figur 7a). Wie in Figur 7a gezeigt, hat die alternative Pulsfolge 111 einen ersten Abschnitt B1 und mindestens einen zweiten Abschnitt B2 (wobei weitere Lichtpulse des zweiten Abschnitts B2 nicht gezeigt sind). Der erste Abschnitt B1 hat eine Dauer Γ₁ (vgl. Figur 7a). Der zweite Abschnitt B2 hat eine Dauer Γ₂ (vgl. Figur 7a).

Im zweiten Pulsschema nach Figur 7a ist die beispielhafte (alternative) Pulsfolge 111 in der obersten Zeile dargestellt. In den Zeilen unterhalb der obersten Zeile sind der erste bis sechste Lichtpuls 111-1 bis 111-6 mit der ersten bis sechsten Pulsdauer *τ*₁ bis *τ*₆ dargestellt (vgl. die Bezugszeichen 12.1 bis 12.6). Durch die einzelnen Lichtpulse (d. h. erster bis sechster Lichtpuls 111-1 bis 111-6 wird die beispielhafte alternative Pulsfolge 111 gebildet. Die einzelnen Lichtpulse werden wiederum durch die erste bis sechste Lichtquelle 12.1 bis 12.6 erzeugt.

Im zweiten Pulsschema nach Figur 7a ist zudem eine beispielhafte Störung 200 in der untersten Zeile dargestellt. Die beispielhafte Störung 200 hat einen ersten bis sechsten Abschnitt 200-1 bis 200-6 und einen nachfolgenden Abschnitt 202. Der nachfolgende Abschnitt 202 erstreckt sich vom Ende des sechsten Abschnitts 200-6 bis zum Ende des ersten Abschnitt B1. Wie in Figur 7a gezeigt, hat die beispielhafte Störung 200 einen sinusförmigen Verlauf.

In den einzelnen Zeilen des zweiten Pulsschemas nach Figur 7a sind jeweils auf der Abszissenachse die Zeit (in a.u.) und auf der Ordinatenachse die Amplitude (in a.u.) eingetragen.

Mit Bezug auf Figur 7a ist die Sensoranordnung dazu ausgebildet, die erste bis sechste Pulsdauer *τ*₁ bis *τ*₆ jeweils zufällig festzulegen und die Verteilung (d. h. Reihenfolge des ersten bis sechsten Lichtpulses 111-1 bis 111-6) zufällig auszuwählen.

Wie in Figur 7a gezeigt, umfasst die Verteilung eine Reihenfolge, wobei die Reihenfolge durch eine Permutation der Erzeugung des ersten bis sechsten Lichtpulses 111-1 bis 111-6 (z. B. erster Lichtpuls 111-1 mit erster Pulsdauer *τ*₁, sechster Lichtpuls 111-6 mit sechster Pulsdauer *τ*₆, fünfter Lichtpuls 111-5 mit fünfter Pulsdauer *τ*₅, vierter Lichtpuls 111-4 mit vierter Pulsdauer *τ*₄, dritter Lichtpuls 111-3 mit dritter Pulsdauer *τ*₃, zweiter Lichtpuls 111-2 mit zweiter Pulsdauer *τ*₂; von links nach rechts) bestimmt ist.

Anstelle der in Figur 7a gezeigten beispielhaften Permutation ist auch jegliche andere Permutation denkbar.

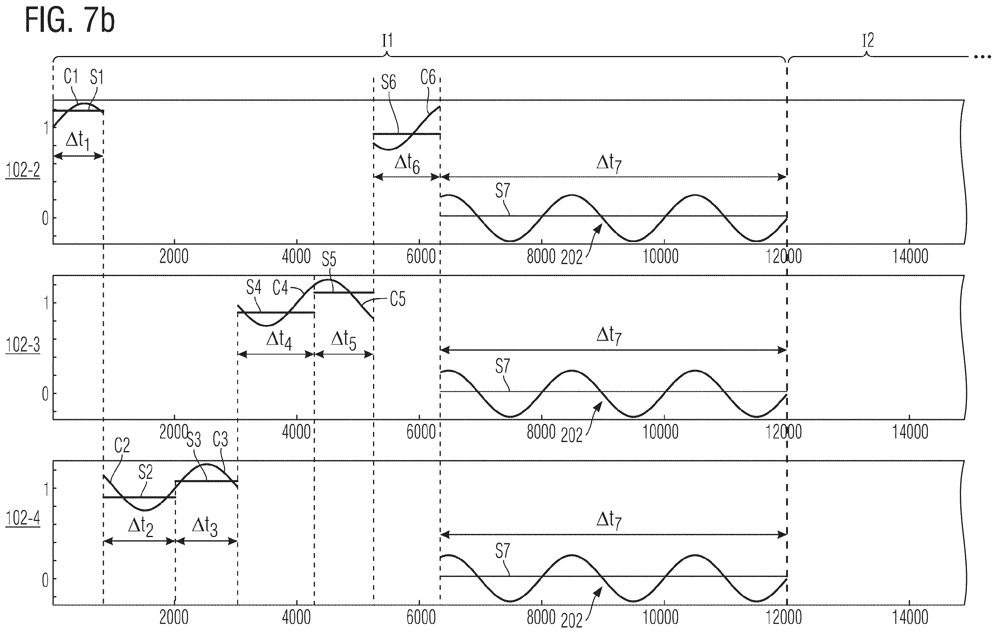

Figur 7b zeigt ein beispielhaftes drittes Detektionsschema in Verbindung mit dem zweiten Pulsschema. In den einzelnen Zeilen des dritten Detektionsschemas nach Figur 7b sind jeweils auf der Abszissenachse die Zeit (in a.u.) und auf der Ordinatenachse die Amplitude (in a.u.) eingetragen.

In den Zeilen des dritten Detektionsschemas nach Figur 7b sind eine erste bis siebte Signalamplitude S1 bis S7 dargestellt (vgl. die Bezugszeichen 102-2 bis 102-4). Durch die einzelnen Signalamplituden (d. h. erste bis siebte Signalamplitude S1 bis S7) wird eine Mehrzahl von Signalamplituden für eine Auswertung nach einem beispielhaften dritten Auswertungsschema (vgl. Figur 8c) gebildet. Die einzelnen Signalamplituden werden wiederum durch die erste und zweite Sende-Empfangs-Einheit 102-2, 102-3 und die Empfangseinheit 102-4 erhalten.

Mit Bezug auf Figur 7a und 7b ist die Sensoranordnung derart ausgebildet, dass die erste Signalamplitude S1 durch eine zeitliche Mittelung eines ersten Summensignals C1 über eine der ersten Pulsdauer *τ*₁ entsprechende erste Zeitdauer Δ*t*₁ erfasst wird, wobei das erste Summensignal C1 auf dem ersten Lichtpuls 111-1 und dem ersten Abschnitt 200-1 der Störung 200 basiert. Ferner ist die Sensoranordnung derart ausgebildet, dass die zweite Signalamplitude S2 durch eine zeitliche Mittelung eines zweiten Summensignals C2 über eine der sechsten Pulsdauer *τ*₆ entsprechende zweite Zeitdauer Δ*t*₂ erfasst wird, wobei das zweite Summensignal C2 auf dem sechsten Lichtpuls 111-6 und dem zweiten Abschnitt 200-2 der Störung 200 basiert. Ferner ist die Sensoranordnung derart ausgebildet, dass die dritte Signalamplitude S3 durch eine zeitliche Mittelung eines dritten Summensignals C3 über eine der fünften Pulsdauer *τ*₅ entsprechende dritte Zeitdauer Δ*t*₃ erfasst wird, wobei das dritte Summensignal C3 auf dem fünften Lichtpuls 111-5 und dem dritten Abschnitt 200-3 der Störung 200 basiert. Ferner ist die Sensoranordnung derart ausgebildet, dass die vierte Signalamplitude S4 durch eine zeitliche Mittelung eines vierten Summensignals C4 über eine der vierten Pulsdauer *τ*₄ entsprechende vierte Zeitdauer Δ*t*₄ erfasst wird, wobei das vierte Summensignal C4 auf dem vierten Lichtpuls 111-4 und dem vierten Abschnitt 200-4 der Störung 200 basiert.

Ferner ist die Sensoranordnung derart ausgebildet, dass die fünfte Signalamplitude S5 durch eine zeitliche Mittelung eines fünften Summensignals C5 über eine der dritten Pulsdauer *τ*₃ entsprechende fünfte Zeitdauer Δ*t*₅ erfasst wird, wobei das fünfte Summensignal C5 auf dem dritten Lichtpuls 111-3 und dem fünften Abschnitt 200-5 der Störung 200 basiert. Ferner ist die Sensoranordnung derart ausgebildet, dass die sechste Signalamplitude S6 durch eine zeitliche Mittelung eines sechsten Summensignals C6 über eine der zweiten Pulsdauer *τ₂* entsprechende sechste Zeitdauer Δ*t*₆ erfasst wird, wobei das sechste Summensignal C6 auf dem zweiten Lichtpuls 111-2 und dem sechsten Abschnitt 200-6 der Störung 200 basiert. Darüber hinaus ist die Sensoranordnung derart ausgebildet, dass die siebte Signalamplitude S7 (in allen Zeilen) durch eine zeitliche Mittelung des nachfolgenden Abschnitts 202 der Störung 200 über eine der Pulspause 113 entsprechende siebte Zeitdauer Δ*t*₇ erfasst wird.

Mit Bezug auf Figur 8c ist die Sensoranordnung derart ausgebildet, dass jede korrigierte Signalamplitude (d. h. erste bis sechste korrigierte Signalamplitude *δ*1*b* bis *δ*6*b*) basierend auf der jeweiligen Signalamplitude (d. h. erste bis sechste Signalamplitude S1 bis S6) und der siebten Signalamplitude S7 (z. B. durch Differenzbildung *δ*1*b* = *S*1 - *S*7; *δ*2*b* = *S*2 - *S*7; *δ*3*b* = *S*3 - *S*7; *δ*4*b* = *S*4 - *S*7; *δ*5*b = S*5 - *S*7; *δ*6*b = S*6 - *S*7) ermittelt wird. In Figur 8c ist beispielhaft eine erste weitere korrigierte Signalamplitude *δ*1*b'* gezeigt, die in analoger Weise für einen weiteren ersten Lichtpuls des zweiten Abschnitts B2 ermittelt werden kann.

Beim dritten Auswertungsschema nach Figur 8c wird eine gemittelte Signalamplitude *̅δ̅*̅1̅*̅b̅*̅ beispielsweise durch Mittelwertbildung mindestens der ersten korrigierten Signalamplitude *δ*1*b* und der weiteren ersten korrigierten Signalamplitude *δ*1*b'* ermittelt. Dies ist anhand von Figur 8c beispielhaft dargestellt.

Beim dritten Auswertungsschema nach Figur 8c können in analoger Weise auch weitere gemittelte Signalamplituden *̅δ̅*̅2̅*̅b̅*̅ bis *̅δ̅*̅6̅*̅b̅*̅ (nicht gezeigt) ermittelt werden.

Durch die Sensoranordnung kann basierend auf den gemittelten Signalamplituden *̅δ̅*̅1̅*̅b̅*̅ und *̅δ̅*̅6̅*̅b̅*̅ das Ausgangssignal S1a (vgl. Figur 3) ermittelt werden. Ferner kann durch die Sensoranordnung basierend auf den gemittelten Signalamplituden *̅δ̅*̅4̅*̅b̅*̅ und *̅δ̅*̅5̅*̅b̅*̅ das Ausgangssignal S2a (vgl. Figur 3) ermittelt werden. Darüber hinaus kann durch die Sensoranordnung basierend auf den gemittelten Signalamplituden *̅δ̅*̅2̅*̅b̅*̅ und *̅δ̅*̅3̅*̅b̅*̅ das Ausgangssignal S3a (vgl. Figur 3) ermittelt werden.

Wie in Figur 8a bis 8c beispielhaft dargestellt, weicht die gemittelte Signalamplitude (d. h. gemittelte Signalamplitude *̅δ̅*̅1̅, *̅δ̅*̅1̅*a̅,* *̅δ̅*̅1̅*̅b̅*̅) nur minimal von einem beispielhaften Referenzwert 1 ab. Der beispielhafte Referenzwert 1 ergibt sich bei einem Referenz-Pulsschema, bei dem die Pulsfolge Lichtpulse jeweils mit einer Amplitude 1 umfasst und keine Störung vorhanden ist. Darüber hinaus erfolgt beim Referenz-Pulsschema die Erzeugung bzw. Modulation der Lichtpulse mit einer festen Frequenz.

Im Fall des Vorhandenseins einer Störung bei solch einem Referenz-Pulsschema ergibt sich hingegen eine deutliche (systematische) Abweichung vom beispielhaften Referenzwert 1 (systematischer Messfehler).

Anhand von Figur 8a bis 8c wird nunmehr verdeutlicht, dass solch ein systematischer Messfehler beim ersten bis dritten Auswertungsschema im Wesentlichen vermieden bzw. minimiert werden kann. Die gemittelte Signalamplitude (d. h. gemittelte Signalamplitude *̅δ̅*̅1̅, *̅δ̅*̅1̅*̅a̅*̅, *̅δ̅*̅1̅*̅b̅*̅) liegt im Wesentlichen bei oder nahe beim beispielhaften Referenzwert 1.

Beispielsweise ist die Störung 200 (vgl. Figur 6a bzw. 7a) eine Störung, die durch Umwelteinflüsse (z. B. Umgebungslicht, Licht anderer Messsysteme, Störung elektrischer Art durch einen Generator, etc.) hervorgerufen wird.

In der vorherigen Erläuterung sind der erste bis sechste Lichtpuls 111-1 bis 111-6 mit der ersten bis sechsten Pulsdauer *τ*₁ bis *τ*₆ beispielhaft dargestellt. Es versteht sich, dass die Erfindung basierend auf mindestens dem ersten bis dritten Lichtpuls 111-1 bis 111-3 mit der ersten bis dritten Pulsdauer *τ*₁ bis *τ*₃ in analoger Weise die vorgenannte Unterdrückung der Störung ermöglicht.

Ein zwischenliegender Metrologie-Block (vgl. Figur 3; Einheit 102-2, 102-3) umfasst vorzugsweise eine einzige Empfangseinheit (z. B. Einheit 20a, 20b) und eine einzige Sendeeinheit (z. B. Einheit 10a, 10b). Alternativ kann ein zwischenliegender Metrologie-Block auch zwei Empfangseinheiten und/oder zwei Sendeeinheiten umfassen. Ein Anfang oder Ende der Metrologie-Kette wird vorzugsweise durch eine einzige Sendeeinheit (z. B. Einheit 102-1) oder eine einzige Empfangseinheit (z. B. Einheit 102-4) gebildet.

Innerhalb der Metrologie-Kette erfolgt eine Übertragung von Licht jeweils zwischen einzelnen Sendeeinheiten und einzelnen Empfangseinheiten, wobei eine Richtung der Übertragung wie in Figur 3 gezeigt (z. B. Pfeil 103-1 bis 103-3) oder in umgekehrter Richtung sein kann.

In letzterem Fall kann die erste Position P1 in Figur 2 alternativ einer Position an oder nahe der Blattspitze des Rotorblatts 1 entsprechen. Die zweite und dritte Position P2, P3 in Figur 2 entsprechen dabei wiederum (umgekehrten) Positionen innerhalb des Rotorblatts 1. Die vierte Position P4 in Figur 2 kann alternativ einer Position an oder nahe der Blattwurzel des Rotorblatts 1 entsprechen. Mit anderen Worten, die Anordnung/Reihenfolge innerhalb der Metrologie-Kette kann in vorteilhafter Weise folgendermaßen sein: Sendeeinheit in der Blattspitze, zwischenliegende Sende-Empfangs-Einheiten, Empfangseinheit in der Blattwurzel.

In vorteilhafter Weise erfolgt innerhalb der Metrologie-Kette die Erzeugung/Detektion der einzelnen Lichtpulse beispielsweise derart, dass durch die einzelnen Sendeeinheiten (bzw. Lichtquellen) immer nur ein Lichtpuls erzeugt (z. B. erstes/zweites Pulsschema; vgl. die Bezugszeichen 12.1 bis 12.6) und durch die entsprechenden Empfangseinheiten jeweils das entsprechende Signal erfasst werden (z. B. erstes bis drittes Detektionsschema; vgl. die Bezugszeichen 102-2 bis 102-4).

Die Erfindung hat insbesondere die folgenden Vorteile. Durch das zufällige Festlegen der Pulsdauern (bzw. Dauern von Pulspausen) und/oder die zufällige Auswahl der Verteilung der Lichtpulse innerhalb der Pulsfolge (z. B. durch Permutation bzw. Abweichung von einer sequenziellen Reihenfolge) kann ein sog. Jitter erzeugt werden, wodurch wiederum eine effiziente Unterdrückung der Störung ermöglicht wird. Dies führt im Wesentlichen zu einer vorteilhaften Fehlertransferfunktion. Durch eine Kombination des zufälligen Festlegens der Pulsdauern und der zufälligen Auswahl der Verteilung kann zudem eine vergrößerte Variation des Jitter erreicht werden. Dies führt wiederum zu einer optimierten Fehlertransferfunktion.

Vorzugsweise ist die Burstdauer über mehrere Abschnitte der Pulsfolge (Bursts) variabel. Alternativ kann die Burstdauer über mehrere Abschnitte der Pulsfolge auch konstant sein. In letzterem Fall sind die Pulsdauern (bzw. Dauern von Pulspausen) jedoch wie in ersterem Fall ebenfalls variabel.

Anstelle von linear polarisiertem Licht sind auch andere Polarisationsarten denkbar.

## Patentansprüche

1. Sensoranordnung zum Erfassen mindestens einer ersten Verformung eines Rotorblatts (1) einer Windkraftanlage, mit
einer an einer ersten Position (P1) angeordneten Sendeeinheit (102-1) und mindestens einer entlang einer Biegelinie des Rotorblatts (1) an einer zweiten Position (P2) angeordneten ersten Sende-Empfangs-Einheit (102-2),
wobei die Sensoranordnung zum Erzeugen von erstem bis drittem Licht (105-1, 105-2, 105-3) ausgebildet ist,
wobei die Sendeeinheit (102-1) derart ausgebildet ist, dass das erste Licht (105-1) als ein erster Lichtpuls (111-1) mit einer ersten Pulsdauer (*τ*₁) erzeugt wird,
wobei die Sensoranordnung derart ausgebildet ist, dass das zweite Licht (105-2) als ein zweiter Lichtpuls (111-2) mit einer zweiten Pulsdauer (*τ*₂) erzeugt wird,
wobei die erste Sende-Empfangs-Einheit (102-2) derart ausgebildet ist, dass das dritte Licht (105-3) als ein dritter Lichtpuls (111-3) mit einer dritten Pulsdauer (*τ*₃) erzeugt wird,
wobei die Sensoranordnung derart ausgebildet ist, dass der erste Lichtpuls (111-1), der zweite Lichtpuls (111-2) und der dritte Lichtpuls (111-3) als Teil einer Pulsfolge (111) erzeugt werden, wobei der erste Lichtpuls (111-1), der zweite Lichtpuls (111-2) und der dritte Lichtpuls (111-3) eine Verteilung innerhalb der Pulsfolge (111) aufweisen,
wobei die Sensoranordnung dazu ausgebildet ist, die erste Pulsdauer (*τ*₁), die zweite Pulsdauer (*τ*₂) und die dritte Pulsdauer (*τ*₃) zufällig festzulegen und/oder die Verteilung zufällig auszuwählen.

2. Sensoranordnung nach Anspruch 1, wobei die Sendeeinheit (102-1) zum Erzeugen des ersten Lichts (105-1) ausgebildet ist, wobei die erste Sende-Empfangs-Einheit (102-2) zum Erzeugen des zweiten und dritten Lichts (105-2, 105-3) ausgebildet ist.

3. Sensoranordnung nach Anspruch 1, wobei die Sendeeinheit (102-1) zum Erzeugen des ersten und zweiten Lichts (105-1, 105-2) ausgebildet ist, wobei die erste Sende-Empfangs-Einheit (102-2) zum Erzeugen des dritten Lichts (105-3) ausgebildet ist.

4. Sensoranordnung nach einem der vorhergehenden Ansprüche, wobei die Sensoranordnung dazu ausgebildet ist, die erste Pulsdauer (*τ*₁), die zweite Pulsdauer (*τ*₂) und die dritte Pulsdauer (*τ*₃) jeweils zufällig festzulegen, ohne dass die Verteilung zufällig ausgewählt wird.

5. Sensoranordnung nach Anspruch 4, wobei die Verteilung eine Reihenfolge umfasst, wobei die Reihenfolge durch den ersten Lichtpuls (111-1) als Anfangspuls, den zweiten Lichtpuls (111-2), der auf den ersten Lichtpuls (111-1) folgt, und den dritten Lichtpuls (111-3), der auf den zweiten Lichtpuls (111-2) folgt, bestimmt ist.

6. Sensoranordnung nach Anspruch 4 oder 5, wobei die Sensoranordnung derart ausgebildet ist, dass der erste Lichtpuls (111-1), der zweite Lichtpuls (111-2) und der dritte Lichtpuls (111-3) derart erzeugt werden, dass die Pulsfolge (111) eine erste Pulspause (113-1) zwischen dem ersten Lichtpuls (111-1) und dem zweiten Lichtpuls (111-2) und eine zweite Pulspause (113-2) zwischen dem zweiten Lichtpuls (111-2) und dem dritten Lichtpuls (111-3) aufweist.

7. Sensoranordnung nach Anspruch 6, wobei die Sensoranordnung derart ausgebildet ist, dass eine erste Signalamplitude (S1) durch eine zeitliche Mittelung eines ersten Summensignals (C1) über eine der ersten Pulsdauer (*τ*₁) entsprechende erste Zeitdauer (Δ*t*₁) erfasst wird, wobei das erste Summensignal (C1) auf dem ersten Lichtpuls (111-1) und einem ersten Abschnitt (200-1) einer Störung (200) basiert, dass eine zweite Signalamplitude (S2) durch eine zeitliche Mittelung eines zweiten Abschnitts (200-2) der Störung (200) über eine der ersten Pulspause (113-1) entsprechende zweite Zeitdauer (Δ*t*₂) erfasst wird, dass eine dritte Signalamplitude (S3) durch eine zeitliche Mittelung eines zweiten Summensignals (C2) über eine der zweiten Pulsdauer (*τ*₂) entsprechende dritte Zeitdauer (Δ*t*₃) erfasst wird, wobei das zweite Summensignal (C2) auf dem zweiten Lichtpuls (111-2) und einem dritten Abschnitt (200-3) der Störung (200) basiert, und dass eine vierte Signalamplitude (S4) durch eine zeitliche Mittelung eines vierten Abschnitts (200-4) der Störung (200) über eine der zweiten Pulspause (113-2) entsprechende vierte Zeitdauer (Δ*t*₄) erfasst wird, wobei die Sensoranordnung derart ausgebildet ist, dass eine erste korrigierte Signalamplitude (*δ*1; *δ*1*a*) basierend auf der ersten Signalamplitude (S1) und mindestens der zweiten Signalamplitude (S2) ermittelt wird, und dass eine zweite korrigierte Signalamplitude (*δ*2; *δ*2*a*) basierend auf der dritten Signalamplitude (S3) und mindestens der vierten Signalamplitude (S4) ermittelt wird.

8. Sensoranordnung nach einem der Ansprüche 1 bis 3, wobei die Sensoranordnung dazu ausgebildet ist, die erste Pulsdauer (*τ*₁), die zweite Pulsdauer (*τ*₂) und die dritte Pulsdauer (*τ*₃) jeweils zufällig festzulegen und die Verteilung zufällig auszuwählen.

9. Sensoranordnung nach Anspruch 8, wobei die Verteilung eine Reihenfolge umfasst, wobei die Reihenfolge durch eine Permutation der Erzeugung des ersten Lichtpulses (111-1), des zweiten Lichtpulses (111-2) und des dritten Lichtpulses (111-3) bestimmt ist.

10. Sensoranordnung nach einem der vorhergehenden Ansprüche, wobei die Sensoranordnung derart ausgebildet ist, dass der erste Lichtpuls (111-1), der zweite Lichtpuls (111-2) und der dritte Lichtpuls (111-3) als Teil einer ersten Gruppe (115-1) von Lichtpulsen erzeugt werden, wobei die Pulsfolge (111) die erste Gruppe (115-1) von Lichtpulsen umfasst, wobei die Sensoranordnung dazu ausgebildet ist, alle Pulsdauern (*τ*₁ bis *τ*₆) der ersten Gruppe (115-1) von Lichtpulsen und alle Dauern (*ε*₁ bis *ε*₆; *ε*) von Pulspausen (113-1 bis 113-6; 113) innerhalb eines ersten Abschnitts (B1) der Pulsfolge (111) jeweils zufällig festzulegen, sodass eine zufällig festgelegte Gesamtdauer der Pulsdauern (*τ*₁ bis *τ*₆) der ersten Gruppe (115-1) von Lichtpulsen und der Dauern (*ε*₁ bis *ε*₆; *ε*) von Pulspausen (113-1 bis 113-6; 113) erhalten wird.

11. Sensoranordnung nach Anspruch 10, wobei eine Dauer (Γ₁) des ersten Abschnitts (B1) der Pulsfolge (111) durch die Gesamtdauer der Pulsdauern (*τ*₁ bis *τ*₆) der ersten Gruppe (115-1) von Lichtpulsen und der Dauern (*ε*₁ bis *ε*₆; *ε*) von Pulspausen bestimmt ist.

12. Sensoranordnung nach Anspruch 10, wobei eine Dauer (Γ₁) des ersten Abschnitts (B1) der Pulsfolge (111) durch die Sensoranordnung fest vorgegeben ist, wobei die Sensoranordnung dazu ausgebildet ist, eine Pulsdauer eines letzten Lichtpulses der ersten Gruppe (115-1) von Lichtpulsen oder eine Dauer (*ε*₆; *ε*) einer letzten Pulspause (113-6; 113) innerhalb des ersten Abschnitts (B1) der Pulsfolge (111) derart anzupassen, dass die Gesamtdauer der Pulsdauern (*τ*₁ bis *τ*₆) der ersten Gruppe (115-1) von Lichtpulsen und der Dauern (*ε*₁ bis *ε*₆; *ε*) von Pulspausen gleich der Dauer (Γ₁) des fest vorgegeben ersten Abschnitts (B1) der Pulsfolge (111) ist.

13. Sensoranordnung nach einem der Ansprüche 10 bis 12, wobei die Sensoranordnung derart ausgebildet ist, dass mindestens ein dem ersten Lichtpuls (111-1) zugeordneter weiterer erster Lichtpuls (111-1a) als Teil mindestens einer zweiten Gruppe (115-2) von Lichtpulsen erzeugt wird, wobei die Pulsfolge (111) die zweite Gruppe (115-2) von Lichtpulsen umfasst, wobei die erste Gruppe (115-1) von Lichtpulsen und die zweite Gruppe (115-2) von Lichtpulsen aufeinanderfolgende Gruppen von Lichtpulsen sind, wobei die Sensoranordnung dazu ausgebildet ist, den weiteren ersten Lichtpuls (111-1a) mit einer weiteren ersten Pulsdauer ( ${τ}_{1}^{′}$) zu erzeugen.

14. Sensoranordnung nach Anspruch 13, wobei die Sensoranordnung derart ausgebildet ist, dass eine erste Signalamplitude (S1) durch eine zeitliche Mittelung eines ersten Summensignals (C1) über eine der ersten Pulsdauer (*τ*₁) entsprechende erste Zeitdauer (Δ*t*₁) erfasst wird, wobei das erste Summensignal (C1) auf dem ersten Lichtpuls (111-1) und einem ersten Abschnitt (200-1) einer Störung (200) basiert, dass eine weitere erste Signalamplitude (S1') durch eine zeitliche Mittelung eines weiteren ersten Summensignals (C1') über eine der weiteren ersten Pulsdauer ( ${τ}_{1}^{′}$) entsprechende weitere erste Zeitdauer ( $Δ {t}_{1}^{′}$) erfasst wird, wobei das weitere erste Summensignal (C1') auf dem weiteren ersten Lichtpuls (111-1a) und einem weiteren ersten Abschnitt (200-1a) der Störung (200) basiert, wobei die Sensoranordnung derart ausgebildet ist, dass eine gemittelte Signalamplitude (*̅δ̅*̅1̅; *̅δ̅*̅1̅*̅a̅*̅; *̅δ̅*̅1̅*̅b̅*̅) basierend auf mindestens der ersten Signalamplitude (S1) und der weiteren ersten Signalamplitude (S1') ermittelt wird.

15. Sensoranordnung nach einem der vorhergehenden Ansprüche, wobei die Sensoranordnung zum Erfassen mindestens einer ersten Torsion (*ϕ*₁) des Rotorblatts (1) basierend auf einer Polarisationsdrehung des ersten Lichts (105-1) ausgebildet ist.
